# EUROPÄISCHE PATENTANMELDUNG

(11) **EP 3 236 063 A1**
(43) Veröffentlichungstag der Anmeldung: **25.10.2017**
(21) Anmeldenummer: 17157102.9
(22) Anmeldetag: 21.02.2017
(51) Int. Cl.: F03D 13/20, F03D 9/00, E04H 12/20, E04H 12/22

(54) **VORRICHTUNG UND VERFAHREN ZUR ENTLASTUNG EINER TRAGSTRUKTUR EINER WINDENERGIEANLAGE**

(30) Priorität: 20.04.2016 DE 102016206644
(71) Anmelder: innogy SE, 45128 Essen (DE)
(72) Erfinder: BARTMINN, Daniel, 25335 Elmshorn (DE)
(74) Vertreter: Kierdorf Ritschel Richly

(57) **Zusammenfassung**

Vorrichtung zur Entlastung einer Tragstruktur einer Windenergieanlage,
- mit einer Entlastungswandung (20), die dazu eingerichtet ist, die Tragstruktur (16) zumindest abschnittsweise umfangsseitig zu umhüllen,
- wobei die Entlastungswandung (20) im fertig montierten Zustand ausgehend von einem fundament- oder gründungsseitigen Verankerungsbereich (22) in Richtung eines gondelseitigen Befestigungsbereichs (24) trichterförmig verjüngt ist.

## Beschreibung

Die Erfindung betrifft eine Vorrichtung zur Entlastung einer Tragstruktur einer Windenergieanlage sowie eine Windenergieanlage mit einer solchen Vorrichtung. Weiter betrifft die Erfindung ein Verfahren zur Entlastung einer Tragstruktur einer Windenergieanlage.

Die Komponenten von Windenergieanlagen, wie zum Beispiel der Rotor, das Getriebe oder auch die Tragstruktur, die den Rotor und die Gondel trägt, sind im Betrieb hohen statischen und dynamischen Lasten ausgesetzt, die zu einem Verschleiß der Bauteile und zur Ermüdung der entsprechenden Materialien führen. Um einen zuverlässigen und sicheren Betrieb von Windkraftanlagen zu gewährleisten, wird der Betrieb zunächst für eine bestimmte Laufzeit behördlich genehmigt.

Um die Laufzeit bestehender Anlagen zu verlängern (Repowering), müssen Teile der Anlage, die aufgrund von Materialermüdung am Ende ihrer Lebensdauer sind, ausgetauscht werden. Neben dem Austausch von Gondel und Rotor kann dies auch die Erneuerung der Tragstruktur und der Fundamente bedeuten, was mit erheblichen Kosten verbunden ist.

Zudem kann eine bestehende Anlage, deren Tragstruktur für eine bestimmte Rotor- und Gondeleinheit konstruiert und dimensioniert worden ist, nicht ohne weiteres mit einem größeren Rotordurchmesser ausgerüstet werden, da die bestehende Tragstruktur für die damit einhergehenden höheren Lasten nicht ausgelegt worden ist.

Vor diesem Hintergrund liegt der vorliegenden Erfindung die Aufgabe zugrunde eine Vorrichtung, ein Verfahren und eine Windenergieanlage anzugeben, die einen kostengünstigen Betrieb bestehender Windenergieanlagen über vorgegebene Laufzeiten hinaus, sowie ein Aufstocken bestehender Anlagen zu höherer Leistungsabgabe ermöglichen.

Die Aufgabe wird durch eine Vorrichtung nach Anspruch 1, eine Windengenergieanlage nach Anspruch 6 und ein Verfahren nach Anspruch 10 gelöst.

Die erfindungsgemäße Vorrichtung hat eine Entlastungswandung, die dazu eingerichtet ist, die Tragstruktur zumindest abschnittsweise umfangsseitig zu umhüllen. Die Entlastungswandung ist im fertig montierten Zustand ausgehend von einem fundament- oder gründungsseitigen Verankerungsbereich in Richtung eines gondelseitigen Befestigungsbereichs trichterförmig verjüngt. Die Entlastungswandung kann derart an einer Tragstruktur, wie einem Turm oder einer vergleichbaren mastartigen Struktur, befestigt werden, dass diese im Wesentlichen keinen Biegebelastungen ausgesetzt ist. Eventuell bestehende Risse der Tragstruktur werden "überdrückt", d.h. es werden im Wesentlichen nur noch Drucklasten über die betreffende Tragstruktur übertragen bzw. durch diese aufgenommen.

Die Vorrichtung zur Entlastung der Tragstruktur ermöglicht es daher, kritische Lastzustände, insbesondere Biegebeanspruchungen, im Bereich der Tragstruktur zu vermeiden. Das Nachrüsten einer Tragstruktur einer Windenergieanlage mit der erfindungsgemäßen Vorrichtung erlaubt es daher, die Belastbarkeit der ursprünglich vorgesehenen Tragstruktur maßgeblich zu steigern.

Damit können einerseits bestehende Windenergieanlegen mit der erfindungsgemäßen Vorrichtung nachgerüstet werden, um diese bestehenden Windenergieanlagen ohne eine vollständige Erneuerung der Fundamente oder der Tragstruktur über das ursprünglich vorgesehene Laufzeitende hinaus weiter zu betreiben. Beispielsweise kann ein Turm oder Mast inklusive seiner Einbauten, wie Kabel, Aufstiege usw. weiterbenutzt werden. Andererseits können bestehende Anlagen aufgestockt und mit größeren Rotoren ausgestattet werden, um die Leistungsabgabe der Anlage zu erhöhen. In beiden Fällen entfallen die Rückbaukosten für bereits installierte Tragstrukturen und deren Fundamente. Diese Vorteile ergeben sich selbst dann, wenn bestehende Fundamente verstärkt oder ergänzt werden.

Es wird somit eine Vorrichtung angegeben, die einen kostengünstigen Betrieb einer bestehenden Windenergieanlage über die ursprünglich vorgegebene Laufzeit hinaus, sowie ein Aufstocken bestehender Anlagen zu höherer Leistungsabgabe ermöglicht. Weitere Ausgestaltungen der erfindungsgemäßen Vorrichtung ergeben sich aus den abhängigen Ansprüchen und der nachstehenden Beschreibung.

Die Entlastungswandung kann die Tragstruktur teilweise oder vollständig umhüllen. Beispielsweise können mehrere separate Teilsegmente vorgesehen sein, die die Entlastungswandung bilden. Alternativ oder ergänzend können einzelne oder mehrere Teilsegmente zumindest abschnittsweise miteinander verbunden sein und die Tragstruktur teilweise oder vollständig umhüllen.

Die Entlastungswandung weist vorzugsweise PVC (Abkürzung für Polyvinylchlorid) und/oder PTFE (Abkürzung für Polytetrafluorethylen) auf. Weiter vorzugsweise kann die Entlastungswandung ferner faserverstärkt ausgebildet sein. Beispielsweise können in der Entlastungswandung Glasfasern und/oder Kohlenstofffasern eingebettet sein.

Grundsätzlich ist es denkbar, die Vorrichtung zur Entlastung von Tragstrukturen an Offshore-Windenergieanlagen einzusetzen. Bevorzugt dient die Vorrichtung jedoch der Entlastung von Tragstrukturen von Onshore-Windkraftanlagen, deren Tragstruktur insbesondere als mastartige Struktur, wie ein Turm oder ein Monopile, ausgestaltet ist.

Die Entlastungswandung kann einlagig ausgeführt sein. Eine solche einlagige Entlastungswandung ist kostengünstig herstellbar. Nach einer bevorzugten Weiterbildung der Vorrichtung kann die Entlastungswandung jedoch zumindest teilweise doppelwandig oder doppelhäutig ausgeführt sein. Auf diese Weise kann eine Wandung geschaffen werden, die aus einer oder mehreren Lagen zusammengesetzt sein kann. Die jeweiligen Lagen können separat bereitgestellt bzw. gefertigt werden und unterschiedliche Eigenschaften bezüglich ihrer statischen und dynamischen Belastbarkeit haben. So kann eine erste Lage aus einem steiferen Material gefertigt sein als eine zweite Lage. Je nach Grad der erforderlichen Entlastung kann daher eine ein-, zwei- oder mehrlagige Struktur vor dem Hintergrund der zu erwartenden Betriebslasten ausgelegt werden.

Die Entlastungswandung kann zwei separate Lagen aufweisen, die insbesondere zumindest abschnittsweise relativ zueinander bewegbar sind. Eine erste Lage kann beispielsweise eine Außenhaut der Entlastungswandung darstellen, die im Wesentlichen der Verkleidung oder dem Witterungsschutz dient, während eine innere, der Tragstruktur zugewandte Lage für die Lastaufnahme vorgesehen ist. Die Entlastungswandung kann insbesondere separate, flexible Schichten aufweisen, die insbesondere zur Dämpfung dynamischer Lastzustände geeignet sein können. Die Entlastungswandung kann in Sandwichbauweise mehrlagig aufgebaut sein.

Die Entlastungswandung kann eine Füllmasse aufweisen, die innerhalb der Entlastungswandung aufgenommen ist. Insbesondere ist die Füllmasse zur Aufnahme und Übertragung von Drucklasten vorgesehen und/oder wird im fertig montierten Zustand im Wesentlichen auf Druck belastet.

Die Entlastungswandung kann beispielsweise nach Art einer Schalung eine zunächst flüssige Masse aufnehmen, die innerhalb der Wandung aushärtet. Beispielsweise kann es sich bei der Füllmasse um Mörtel, Beton, Stahlfaserbeton, Zement oder Polymerbeton handeln.

Die Entlastungswandung kann aus einer Mehrzahl von Wandungssegmenten zusammengesetzt sein. So kann die Entlassungswandung beispielsweise als modulares System auf verschiedene Baugrößen oder für verschiedene Bauraumvorgaben angepasst werden. Die Segmente können lösbar oder stoffschlüssig miteinander verbunden sein.

Nach einer Weiterbildung der Vorrichtung ist die Entlastungswandung zumindest teilweise aus einem Kunststoff, wie PVC oder PTFE oder dergleichen, hergestellt. Alternativ oder ergänzend kann die Entlastungswandung zumindest abschnittsweise einen faserverstärkten Kunststoff aufweisen. Die Entlastungswandung kann daher kostengünstig aus bekannten und insbesondere leichten Werkstoffen gefertigt werden, die je nach geforderter Steifigkeit ausgewählt werden können.

Es kann vorgesehen sein, dass eine erste Lage der Wandung aus einem ersten Kunststoff und eine zweite Lage der Wandung aus einem zweiten Kunststoff hergestellt ist. Die Kunststoffe können je nach Art und Betrag der zu ertragenden Beanspruchungen ausgewählt werden. Eine kostengünstige Entlastungswandung lässt sich dann angeben, wenn die Lagen der Entlastungswandung aus dem gleichen Kunststoffmaterial hergestellt sind.

Die Entlastungswandung kann eine im Wesentlichen antiklastische Form haben und/oder in einem Längsschnitt betrachtet konkav gekrümmt sein. "Konkav" bedeutet vorliegend, dass die Entlastungswandung zu einer von ihr umhüllten Tragstruktur hin nach innen gekrümmt ist. Eine im Längsschnitt konkave Form oder die antiklastische Form der Entlastungswandung haben jeweils den Vorteil, dass sich die betreffende Wandung einfach in den Bauraum zwischen dem Rotor und der Tragstruktur einbinden lässt und in einem an die Gondel angrenzenden Bereich der Tragstruktur befestigt werden kann.

Sofern eine derart gekrümmte Entlastungswandung mit einem Füllstoff, wie Beton oder dergleichen, ausgefüllt wird, nimmt der ausgehärtete Füllstoff nur Druckkräfte auf. Eine Biegebelastung der Tragstruktur kann zudem zuverlässig vermieden werden.

Die Entlastungswandung kann zumindest teilweise in ihrem Inneren durch Stahlseile, Bewehrungs- oder Armierungselemente verstärkt sein. Die Entlastungswandung kann in ihrem Inneren Bewehrungs- oder Armierungselemente aus Stahl und/oder Karbon umfassen um die Struktur auszusteifen und zusätzliche Zugkräfte aufzunehmen. Die Bewehrungs- oder Armierungselemente können von einem voranstehend beschriebenen Füllmaterial umschlossen bzw. eingefasst sein.

Die Entlastungswandung kann im Bereich ihrer Außenhaut zur weiteren Energiegewinnung Solarzellen tragen, insbesondere organische und/oder transparente Solarzellen. Durch die der Form der Entlastungswandung inhärente Neigung der Außenhaut lässt sich die durch die Entlastungswandung aufgespannte Außenfläche mithilfe der Solarzellen zur weiteren Energiegewinnung nutzen.

Gemäß einem weiteren Aspekt betrifft die Erfindung eine Windenergieanlage, mit einer Gondel, einem Rotor, einer Tragstruktur, welche die Gondel und den Rotor trägt, und einer voranstehend beschriebenen Vorrichtung zur Entlastung der Tragstruktur.

Bei der Windenergieanlage kann es sich um eine Anlage handeln, die am Ende ihrer strukturellen oder genehmigungsrechtlichen Laufzeit steht. Das bedeutet, dass die Tragstruktur der Anlage oder das Fundament Zeichen der Materialermüdung, wie Risse, Abplatzungen oder Berststellen aufweisen können. Mithilfe der erfindungsgemäßen Vorrichtung kann eine betriebssichere Weiterverwendung der bereits bestehenden Tragstruktur und/oder des Fundaments erreicht werden.

Vorteilhafte Weiterbildungen der erfindungsgemäßen Windenergieanlage ergeben sich aus den abhängigen Ansprüchen und der nachstehenden Beschreibung.

Bei der Tragstruktur der Windenergieanlage kann es sich um eine mastartige Struktur, wie einen Turm, einen Monopile oder dergleichen, handeln. Derartige Strukturen sind besonders anfällig für Rissbildungen, die aus Biegebeanspruchungen resultieren und können zuverlässig mit einer erfindungsgemäßen Vorrichtung entlastet werden.

Um die Vorrichtung sicher zu verankern, können als Seile ausgebildete Zugkraftübertragungseinrichtungen zum Abspannen der Entlastungswandung vorgesehen sein. Die Seile können zusätzlich und separat zu einer Verankerung der Entlastungswandung an einem Fundament oder an Gründungspfählen befestigt sein. Die Seile können ausgehend von einem Zwischenring der Entlastungswandung zu einem Fußbereich der Tragstruktur hin verspannt sein. Der Zwischenring kann beispielsweise im Bereich der mittleren Höhe der Vorrichtung angeordnet sein, wobei die Höhe vorliegend entlang der vertikalen Erstreckung der Tragstruktur gemessen wird.

Die Entlastungswandung kann mit ihrem Befestigungsbereich an einem Turm- oder Zwischenflansch der zu entlastenden Tragstruktur abgehängt sein. Somit können bestehende Flansche oder umlaufende Kragen einer Tragstruktur zur Anbindung der Entlastungswandung verwendet werden.

Alternativ oder ergänzend können zur Verankerung des Verankerungsbereichs der Entlastungswandung zusätzliche Gründungspfähle vorgesehen sein. Die zusätzlichen Gründungspfähle werden daher nachträglich ergänzend zu bereits bestehenden Fundamenten oder Gründungspfählen eingesetzt, um eine zuverlässige Verankerung der Entlastungswandung zu erreichen und damit gleichermaßen die Verankerung der Tragstruktur im Untergrund zu verbessern.

Schließlich betrifft die Erfindung gemäß einem letzten Aspekt ein Verfahren zur Entlastung einer Tragstruktur einer Windenergieanlage, mit den Verfahrensschritten:
- Bereitstellen einer erfindungsgemäßen Vorrichtung;
- Befestigen der Entlastungswandung an der Tragstruktur einer Windenergieanlage, wobei die Entlastungswandung die Tragstruktur umfangsseitig umhüllt.

Die Form einer im Wesentlichen flexiblen Entlastungswandung kann durch ein Verspannen derselben zwischen einem Flansch, Gründungspfählen und einem Fußbereich der Tragstruktur erzeugt werden, wobei vertikale und umfangsseitige Zugkräfte auf die Wandung wirken. Die Wandung kann in diesem vorgespannten Zustand mit einem Füllmaterial ausgegossen werden. Das ausgehärtete Füllmaterial nimmt bevorzugt nur Druckkräfte auf. Die Tragstruktur muss keine oder nur geringe Biegekräfte aufnehmen und wird somit entlastet. Durch das erfindungsgemäße Verfahren ergeben sich zudem Bauzeitverkürzungen, da ein aufwändiger Rückbau bestehender Fundamente und Tragstrukturen entfallen kann.

Durch das erfindungsgemäße Verfahren ergeben sich die bereits mit Bezug zu der Vorrichtung und der Windenergieanlage beschriebenen Vorteile, dass sich die Lebensdauer einer Tragstruktur verlängern lässt und gegebenenfalls eine Aufstockung der Anlage ermöglicht werden kann.

Nachfolgend wird die Erfindung anhand einer Ausführungsbeispiele darstellenden Zeichnungen näher beschreiben. Es zeigen jeweils schematisch:
- Fig. 1: eine erfindungsgemäße Windenergieanlage in einer Seitenansicht;
- Fig. 2: eine Schnittdarstellung einer erfindungsgemäßen Entlastungswandung;
- Fig. 3: eine perspektivische Teilansicht einer erfindungsgemäßen Vorrichtung.

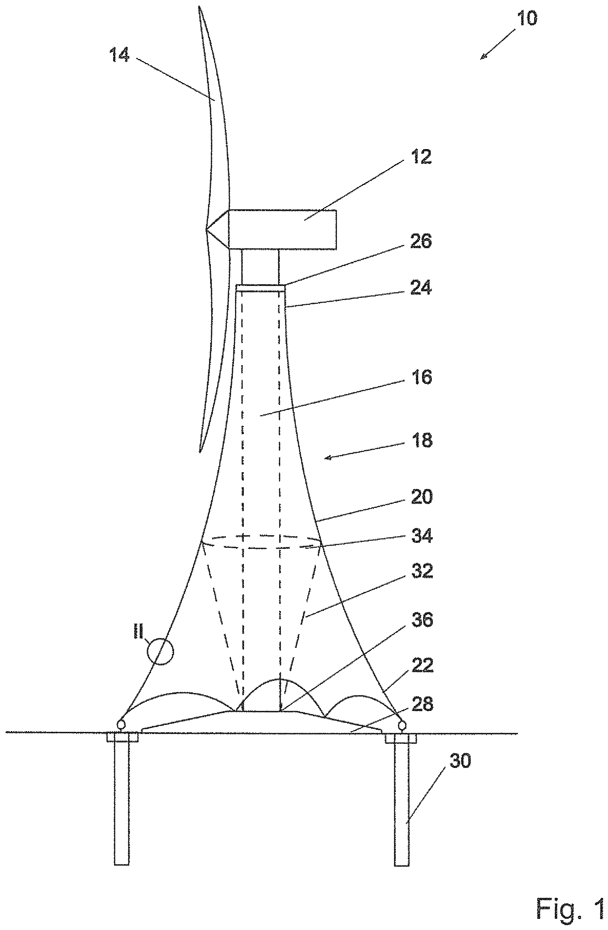

In Fig. 1 ist eine erfindungsgemäße Windenergieanlage 10 dargestellt. Die Windenergieanlage 10 hat eine Gondel 12, einen Rotor 14 und eine Tragstruktur 16, welche die Gondel 12 und den Rotor 14 trägt. Die Tragstruktur 16 ist vorliegend als Turm ausgeführt.

Weiter umfasst die Windenergieanlage 10 eine Vorrichtung 18 zur Entlastung der Tragstruktur 16. Die Tragstruktur 16 ist von einer Entlastungswandung 20 der Vorrichtung 18 umfangsseitig umhüllt. Die Entlastungswandung 20 ist ausgehend von einem fundamentseitigen Verankerungsbereich 22 in Richtung eines gondelseitigen Befestigungsbereichs 24 trichterförmig verjüngt. Die Entlastungswandung 20 weist eine im Wesentlichen antiklastische Form auf und ist in einem Längsschnitt betrachtet konkav gekrümmt. Die Entlastungswandung 20 weist fundamentseitig somit einen größeren Durchmesser auf als gondelseitig.

Die Entlastungswandung 20 ist mit dem Befestigungsbereich 24 an einem Turmflansch 26 der Tragstruktur 16 abgehängt. Zur Verankerung der Entlastungswandung 20 im Verankerungsbereich 22 sind neben einem Fundament 28 zusätzliche Gründungspfähle 30 vorgesehen. Weiter sind Seile 32 zum Spannen der Entlastungswandung 20 vorgesehen, wobei die Seile 32 ausgehend von einem Zwischenring 34 zu einem Fußbereich 36 der Tragstruktur 16 hin verspannt sind.

Die Form einer im Wesentlichen flexiblen Entlastungswandung 20 kann durch ein Verspannen derselben zwischen dem Flansch 26, den Gründungspfählen 30 und dem Fußbereich 36 erzeugt werden, wobei vertikale und umfangsseitige Zugkräfte wirken. Die Wandung kann in diesem vorgespannten Zustand mit einem Füllmaterial ausgegossen werden.

Mithilfe der Vorrichtung 18 wird der Turm 16 nicht mehr auf Biegung beansprucht und ist im Wesentlichen Drucklasten ausgesetzt.

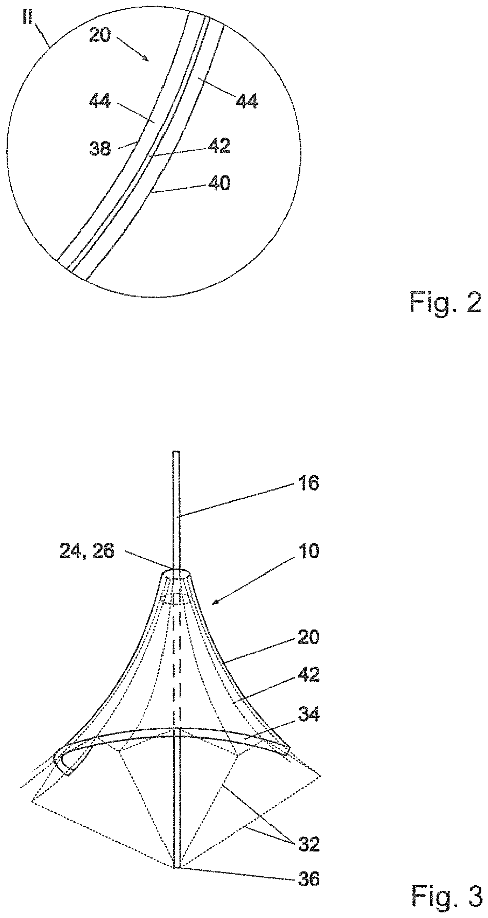

Fig. 2 zeigt eine vergrößerte Darstellung eines Querschnitts II der Entlastungswandung 20 aus Fig. 1. Die Entlastungswandung 20 hat eine äußere Decklage 38 und eine innere Decklage 40, die aus einem Kunststoff hergestellt sind. Zwischen den Decklagen 38, 40 ist eine Armierung 42 aus einem Stahlwerkstoff vorgesehen. Zudem ist ein zwischen den Decklagen gebildeter Innenraum mit Beton 44 ausgegossen. Der Beton 44 wird innerhalb der Entlastungswandung 20 bedingt durch deren Form im Wesentlichen auf Druck belastet.

Fig. 3 zeigt eine perspektivische, wiederum lediglich schematische Teilansicht der Vorrichtung 10 aus Fig. 1, die einen Turm 16 umhüllt. Wie aus dieser Darstellung zu erkennen ist, sind eine Mehrzahl von Seilen 32 vorgesehen, die zum Fußbereich 36 der Tragstruktur 16 hin verspannt sind. Insbesondere können die Seile 32 mit der Armierung 42, bei der es sich ebenfalls um langgestreckte, seilartige Komponenten handeln kann, gekoppelt sein.

### Bezugszeichenliste

- 10: Windenergieanlage
- 12: Gondel
- 14: Rotor
- 16: Tragstruktur
- 18: Vorrichtung
- 20: Entlastungswandung
- 22: Verankerungsbereich
- 24: Befestigungsbereich
- 26: Turmflansch
- 28: Fundament
- 30: Gründungspfahl
- 32: Zugkraftübertragungseinrichtung / Seil
- 34: Zwischenring
- 36: Fußbereich
- 38: äußere Decklage
- 40: innere Decklage
- 42: Armierung
- 44: Beton

## Patentansprüche

1. Vorrichtung zur Entlastung einer Tragstruktur einer Windenergieanlage,
- mit einer Entlastungswandung (20), die dazu eingerichtet ist, die Tragstruktur (16) zumindest abschnittsweise umfangsseitig zu umhüllen,
- wobei die Entlastungswandung (20) im fertig montierten Zustand ausgehend von einem fundament- oder gründungsseitigen Verankerungsbereich (22) in Richtung eines gondelseitigen Befestigungsbereichs (24) trichterförmig verjüngt ist.

2. Vorrichtung nach Anspruch 1, **dadurch gekennzeichnet, dass** die Entlastungswandung (20)
- zumindest teilweise doppelwandig ausgeführt ist, und/oder
- wenigstens zwei separate Lagen (38, 40, 42, 44) aufweist, die insbesondere zumindest abschnittsweise relativ zueinander bewegbar sind,
und/oder
- eine Füllmasse (44) aufweist, die innerhalb der Entlastungswandung (20) aufgenommen ist,
und/oder
- in Sandwichbauweise mehrlagig aufgebaut ist und/oder
- aus einer Mehrzahl von Wandungssegmenten zusammengesetzt ist.

3. Vorrichtung nach einem der voranstehenden Ansprüche, **dadurch gekennzeichnet, dass** die Entlastungswandung (20)
- zumindest teilweise aus einem Kunststoff, wie PVC oder PTFE oder dergleichen, hergestellt ist,
und/oder
- zumindest abschnittsweise einen faserverstärkten Kunststoff aufweist,
und/oder
- zumindest teilweise in ihrem Inneren durch Stahlseile, Bewehrungs- oder Armierungselemente verstärkt ist.

4. Vorrichtung nach Anspruch 2 und Anspruch 3, **dadurch gekennzeichnet, dass**
- eine erste Lage (38, 40, 42, 44) aus einem ersten Kunststoff und eine zweite Lage (38, 40, 42, 44) aus einem zweiten Kunststoff hergestellt ist
oder
- die Lagen (38, 40, 42, 44) aus dem gleichen Kunststoffmaterial hergestellt sind.

5. Vorrichtung nach einem der voranstehenden Ansprüche, **dadurch gekennzeichnet, dass** die Entlastungswandung (20)
- eine im Wesentlichen antiklastische Form hat
und/oder
- in einem Längsschnitt betrachtet konkav gekrümmt ist und/oder
- im Bereich ihrer Außenhaut zur weiteren Energiegewinnung Solarzellen trägt, insbesondere organische und/oder transparente Solarzellen.

6. Windenergieanlage, mit
- einer Gondel (12),
- einem Rotor (14),
- einer Tragstruktur (16), welche die Gondel (12) und den Rotor (14) trägt, und
- einer Vorrichtung (18) zur Entlastung der Tragstruktur (16) nach einem der voranstehenden Ansprüche.

7. Windenergieanlage nach Anspruch 6, **dadurch gekennzeichnet, dass** die Tragstruktur (16) als eine mastartige Struktur, wie ein Turm, ein Monopile oder dergleichen ausgebildet ist.

8. Windenergieanlage nach Anspruch 6 oder 7, **dadurch gekennzeichnet, dass** Zugkraftübertragungseinrichtungen (32) zum Abspannen der Entlastungswandung (20) vorgesehen sind, wobei die Zugkraftübertragungseinrichtungen (20) insbesondere ausgehend von einem Zwischenring (34) zu einem Fußbereich (36) der Tragstruktur (16) hin verspannt sind.

9. Windenergieanlage nach einem der Ansprüche 6 bis 8, **dadurch gekennzeichnet, dass**
- die Entlastungswandung (20) mit dem Befestigungsbereich (24) an einem Turmflansch (26) oder einem Zwischenturmflansch abgehängt ist
und/oder
- zur Verankerung der Entlastungswandung (20) im Verankerungsbereich (22) zusätzliche Gründungspfähle (30) vorgesehen sind.

10. Verfahren zur Entlastung einer Tragstruktur einer Windenergieanlage, mit den Verfahrensschritten:
- Bereitstellen einer Vorrichtung (18) nach einem der Ansprüche 1 bis 5;
- Befestigen der Entlastungswandung (20) an einer Tragstruktur (16) einer Windenergieanlage (10), wobei die Entlastungswandung (20) die Tragstruktur (16) umfangsseitig umhüllt.
